# EUROPEAN PATENT APPLICATION

(11) **EP 4 395 459 A1**
(43) Date of publication of application: **03.07.2024**
(21) Application number: 23213009.6
(22) Date of filing: 29.11.2023
(51) Int. Cl.: H05B 6/12, A47J 36/32

(54) **AN INDUCTION HEATING COOKER**

(30) Priority: 27.12.2022 TR 202220636
(71) Applicant: Arçelik Anonim Sirketi, 34445 Istanbul (TR)
(72) Inventor: ALTUNTAS, Hakan, 34445 Istanbul (TR); ARSLAN, Mehmet Selcuk, 34445 Istanbul (TR)

(57) **Abstract**

The present invention relates to an induction heating cooker (1) comprising a cooker glass (2) whereon the cooking vessel is placed; at least one plate (4) which is positioned under the cooker glass (2); at least one coil (3) which is placed on a plate (4) and which provides the heating of the cooking vessel; at least one temperature sensor (6) which detects the temperature of the cooking vessel; a holder (7) which has at least one housing (7.2) on a base surface (7.1) thereof wherein the at least one temperature sensor (6) can be placed and which is joined with the plate (4) by means of a connection member; and at least one filtering member (8) which is positioned at the top of the temperature sensor (6) to cover the at least one temperature sensor (6).

## Description

### Technical Field

The present invention relates to a sensor design which enables contactless measurement of the temperature of the cooking vessel in the induction heating cookers.

### State of the Art

With the developments in technology and new usage habits, the users need cooking support to keep the temperature of the foodstuffs in the cooking vessel (pot, pan, etc.) under control throughout the cooking process. In line with said need of the users, if the temperature of the pot or pan can be measured during the cooking process, the cooking process can be performed at the targeted ideal temperatures. By measuring the temperature of the cooking vessel or the foodstuffs therein, the foodstuffs can be cooked in a healthy manner while ensuring the best cooking performance and the automatic cooking. Thus, significant improvements in the cooking quality, health and user comfort are provided. Moreover, energy efficiency increases and security risks are minimized.

In traditional state of the art induction heating cookers, a power level is generally selected from a range of 1 to 10. However, as a result of this selection, the induction heating cooker keeps the power at the selected level but cannot provide temperature control. Therefore, the temperature changes uncontrollably during the cooking process, and this change causes the foodstuffs to burn or be overcooked or not to be cooked as desired.

Adjusting the temperature while cooking on the induction heating cooker creates some difficulties and problems in the state of the art. Various technical problems arise depending on the temperature measurement method to be used.

To ensure the optimum cooking vessel temperature control, it is required to use a sensor and a control and measurement algorithm working depending on the same. At this point, different measurement methods are used depending on the location of the sensor. Said methods include placing an apparatus in the cooking vessel, attaching an apparatus on the pot, and placing a detection system on and in the cooker. All these methods basically include a sensor technology.

However, measurement by placing an apparatus in the cooking vessel or attaching an apparatus to the outer surface thereof, which are among the state of the art techniques, often causes difficulty in use and a safety hazard. In the method of measuring through a detection on the cooker, losses in measurement sensitivity and application difficulties occur due to dirt accumulation.

Another problem encountered in the state of the art is that when the heating process starts in the induction heating cooker, the cooking vessel heats up first and then the foodstuffs heat up. Meanwhile, the cooker glass also begins to heat up due to indirect heat transfer. Therefore, the sensor cannot directly and exclusively measure the temperature of the cooking vessel. This creates a problem in reaching the required temperature for the foodstuffs in the cooking vessel to be cooked in the most efficient way.

In the state of the art Patent No. EP3196175B1, a cooker is disclosed, having a glass ceramic cooking surface with increased mechanical strength thanks to a simultaneously increased spectral transmittance in the infrared range, wherein the glass ceramic cooking surface makes it possible to use an infrared sensor to better determine the temperature of a cooking vessel and to perform an automated cooking process.

Given the problems in the state of the art, there is a need for an induction heating cooker which ensures that the temperature of the cooking vessel can be measured and controlled, which enables the temperature of the cooking vessel to be set and kept at a certain temperature and which prevents the foodstuffs being cooked from burning or from being left uncooked.

### Brief Description of the Invention

The aim of the present invention is the realization of an induction heating having a structure which prevents reflections from the cooker glass from reaching the sensor and makes the measurement of the temperature of the cooking vessel with high precision possible.

Another aim of the present invention is the realization of an induction heating cooker which prevents the sensor from heating directly and enable the sensor to have a wide measurement dynamic range.

Another aim of the present invention is the realization of an induction heating cooker which allows spot measurement with said structure which can be installed in appropriate dimensions according to the viewing angle of the sensor and which eliminates reflections from the cooker glass, wherein the temperature of the cooking vessel can measured directly.

The induction heating cooker realized in order to attain the aim of the present invention, explicated in the first claim and the respective claims thereof, comprises a cooker glass whereon the cooking vessel is placed; at least one plate which is positioned under the cooker glass; at least one coil which is placed on a plate and which provides the heating of the cooking vessel; at least one temperature sensor which detects the temperature of the cooking vessel; a holder which has at least one housing on a base surface thereof wherein the at least one temperature sensor can be placed and which is joined with the plate by means of a connection member; and at least one filtering member which is positioned at the top of the temperature sensor to cover the at least one temperature sensor.

An induction heating cooker realized in order to attain the aim of the present invention is illustrated in the attached figures, where:

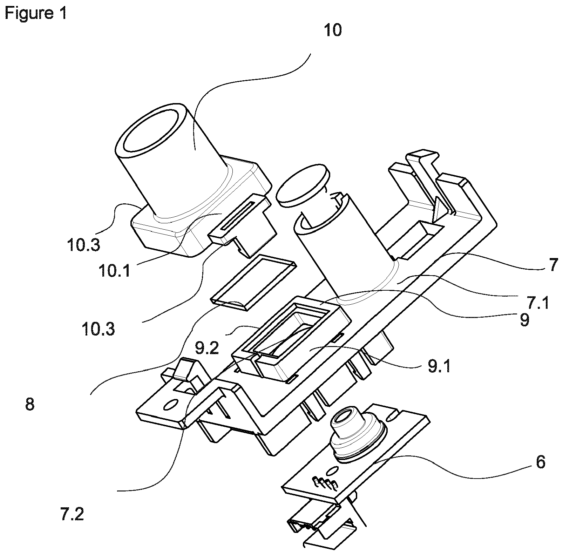

**Figure 1****:** is the front exploded perspective view of the telescopic piece, the holder and the sensor structure.

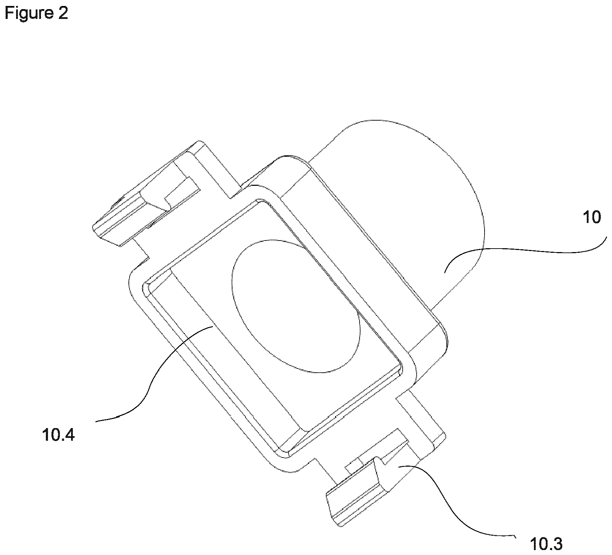

**Figure 2****:** is the bottom perspective view of the telescopic piece.

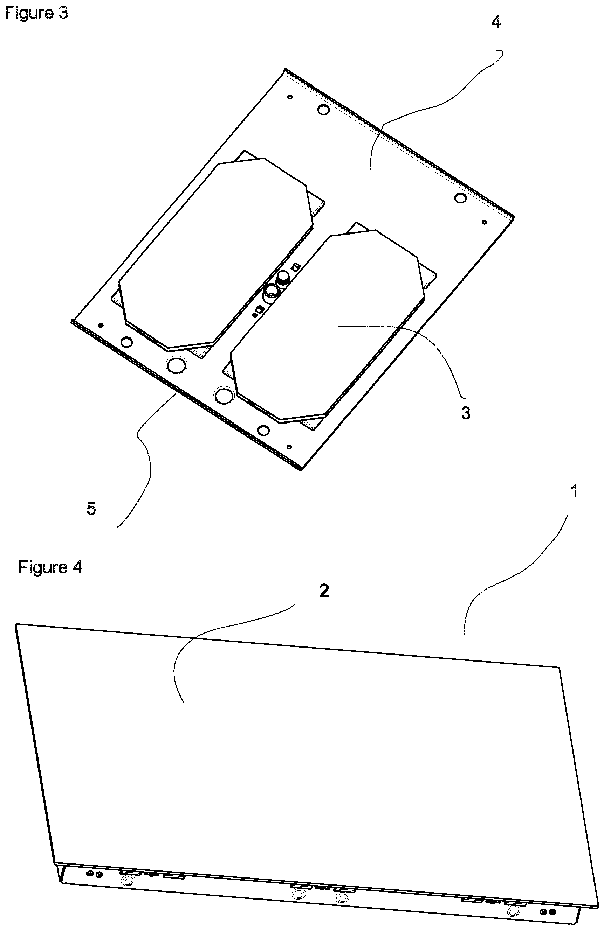

**Figure 3****:** is the top perspective view of the plate and the cooking zone in an induction heating cooker.

The following numerals are referred to in the description of the present invention:
1. Induction cooker
2. Cooker glass
3. Coil
4. Plate
5. Cooking zone
6. Sensor
7. Holder
   7.1 Base surface
   7.2 Housing
8. Filtering member
9. Container
   9.1 First edge
   9.2 Second edge
10. Telescopic piece
   10.1 First edge surface
   10.2 Second edge surface
   10.3 Connection member
   10.4 Opening

### Detailed Description of the Invention

The induction heating cooker (1) comprises a cooker glass (2) whereon the cooking vessel is placed; at least one plate (4) which is positioned under the cooker glass (2); at least one coil (3) which is placed on a plate (4) and which provides the heating of the cooking vessel; at least one temperature sensor (6) which detects the temperature of the cooking vessel; a holder (7) which has at least one housing (7.2) on a base surface (7.1) thereof wherein the at least one temperature sensor (6) can be placed and which is joined with the plate (4) by means of a connection member; and at least one filtering member (8) which is positioned at the top of the temperature sensor (6) to cover the at least one temperature sensor (6). By means of the placement of said filtering member (8), which has the same or similar permeability (optical characteristics) as the cooker glass (2), in front of the temperature sensor (6), the filtering member (8) heats up equally with the cooker glass (2), thus eliminating the radiation coming from the cooker glass (2). Thus, a temperature sensor (6) system which is not affected by misleading radiation coming from the cooker glass (2) and other reflections on the induction heating cooker (1) and which makes an accurate measurement becomes possible.

In an embodiment of the present invention, the filtering member (8) is placed in the housing (7.2), wherein the temperature sensor (6) is positioned, so as to eliminate any gaps at the sides and to align with the upper surface of the sensor (6).

In an embodiment of the present invention, the induction heating cooker (1) comprises at least one coil (3) which provides the heating of the cooking vessel. A cooking zone (5) is formed by bringing together the desired number of coils (3). The plate (4) is positioned under the coils (3) forming said cooking zone (5).

In an embodiment of the present invention, the plate (4) is manufactured from metal material.

In an embodiment of the present invention, the U-shaped monolithic holder (7) comprises the first arm which is joined with a first connection edge of the plate (4), a second arm which is joined with a second connection edge of the plate (4), and a recessed base surface (7.1) whereon at least one infrared sensor (6) and at least one temperature sensor (6) are positioned. Thus, an air gap is formed between the sensor (6) and the plate (4). In said embodiment, the temperature sensor (6) is positioned in a housing (7.2) provided on the base surface (7.1) of the holder (7). In the induction heating cookers (1), by means of said holder (7), the sensor (6) can be positioned on the holder (7) so as not to directly contact the cooker glass (2) but so as to be as close as possible to the cooker glass (2), and by means of the assembly of the holder (7) and the plate (4), accurate measurements can be made in the induction heating cookers (1).

In an embodiment of the present invention, the temperature sensor (6) used in the induction heating cookers (1) is preferably an infrared temperature sensor (6).

In an embodiment of the present invention, the filtering member (8) is manufactured from a material with a wavelength transmittance similar to the material from which the cooker glass (2) is manufactured.

In another embodiment of the present invention, the induction heating cooker (1) further comprises at least one container (9) which has a detachable structure and which is placed in the area of the holder (7) where the housing (7.2) is located on the base surface (7.1).

In another embodiment of the present invention, the filtering member (8) is positioned in the container (9).

The infrared sensor (6) has a viewing angle, and it is critical to measure the temperature of the cooker glass (2) area within this viewing angle from the closest possible point to make an accurate compensation. By means of the mounting of the holder (7) and the plate (4) to each other with said different mounting methods and the positioning of the infrared sensor (6), with the filtering member (8) positioned thereon, in the housing (7.2) located on the base surface (7.1) of the holder (7), the temperature of the cooker glass (2) is measured from the closest possible distance so as to ensure that the most accurate values are obtained. Thus, a sensor structure which is not affected by misleading radiation coming from the cooker glass (2) and other reflections on the induction heating cooker (1) and which makes an accurate measurement becomes possible.

In an embodiment of the present invention, the housing (7.2) and the container (9) can be positioned anywhere on the base surface (7.1) so as to align with the housing (7.2).

In an embodiment of the present invention, the container (9) has a rectangular structure so as to at least completely cover the sensor (6) and the filtering member (8) has such a size as to fit exactly in said container (9) without leaving any gaps between the filtering member (8) and the inner walls of the container (9).

In an embodiment of the present invention, the induction heating cooker (1) further comprises a telescopic piece (10) which is connected to at least one edge (9.1, 9.2) of the container (9) from at least one edge surface (10.1, 10.2) thereof by means of at least one connection member (10.3) and which has an opening (10.4) at least partially covering the housing (7.2) and the container (9). In an embodiment of the present invention, by means of a telescopic piece (10) and temperature sensor (6) structure positioned respectively under the cooker glass (2) and measuring only the temperature of the cooking vessel in said induction heating cooker (1), the temperature sensor (6) is enabled to make a more focused measurement and precise measurements can be taken regarding the cooking temperature. Thus, the sensor (6) is not affected by the environmental ambient temperature and the dynamic measurement range thereof can be expanded.

In an embodiment of the present invention, in order to ensure the connection with the container (9), the telescopic piece (10) comprises at least two connection members (10.3), at least one on each edge surface (10.1, 10.2), which join a first edge surface (10.1) with the first edge (9.1) and a second edge surface (10.2) with the second edge (9.2).

In an embodiment of the present invention, the connection member (10.3) providing the connection of the telescopic piece (10) and the container (9) has a structure which can be flexibly attached to at least one edge portion (9.1, 9.2) of the container (9) so as to provide locking.

In an embodiment of the present invention, the induction heating cooker (1) further comprises a user interface which enable temperature adjustments on the induction heating cooker (1). Thus, the user can increase or decrease the temperature via the user interface. The user has the full control.

## Claims

1. An induction heating cooker (1) **comprising** a cooker glass (2) whereon the cooking vessel is placed; at least one plate (4) positioned under the cooker glass (2); at least one coil (3) placed on a plate (4) and which provides the heating of the cooking vessel; and at least one temperature sensor (6) which detects the temperature of the cooking vessel, **characterized by** a holder (7) which has at least one housing (7.2) on a base surface (7.1) thereof wherein the at least one temperature sensor (6) can be placed and which is joined with the plate (4) by means of a connection member; and at least one filtering member (8) positioned at the top of the temperature sensor (6) to cover the at least one temperature sensor (6).

2. An induction heating cooker (1) as in Claim 1, **characterized by** the filtering member (8) placed in the housing (7.2), wherein the temperature sensor (6) is positioned, so as to eliminate any gaps at the sides and to align with the upper surface of the sensor (6).

3. An induction heating cooker (1) as in Claim 1 or 2, **characterized by** the filtering member (8) manufactured from a material with a wavelength transmittance similar to the material from which the cooker glass (2) is manufactured.

4. An induction heating cooker (1) as in Claim 3, **characterized by** at least one container (9) having a detachable structure and which is placed in the area of the holder (7) where the housing (7.2) is located on the base surface (7.1).

5. An induction heating cooker (1) as in Claim 1 or any one of Claim 3 to 4, **characterized in that** the filtering member (8) is positioned on or in the container (9).

6. An induction heating cooker (1) as in Claim 5, **characterized by** the filtering member (8) having such a size as to fit exactly in the container (9) without leaving any gaps between the filtering member (8) and the inner walls of the container (9).

7. An induction heating cooker (1) as in Claim 6, **characterized by** the container (9) having a rectangular structure so as to at least completely cover the sensor (6)

8. An induction heating cooker (1) as in any one of Claims 4 to 7, **characterized by** a telescopic piece (10) connected to at least one edge (9.1, 9.2) of the container (9) from at least one edge surface (10.1, 10.2) thereof by means of at least one connection member (10.3) and having an opening (10.4) at least partially covering the housing (7.2) and the container (9).

9. An induction heating cooker (1) as in Claim 8, **characterized by,** the telescopic piece (10) which, in order to ensure the connection with the container (9), comprises at least two connection members (10.3), at least one on each edge surface (10.1, 10.2), which join a first edge surface (10.1) with the first edge (9.1) and a second edge surface (10.2) with the second edge (9.2).

10. An induction heating cooker (1) as in Claim 9, **characterized in that** the connection member (10.3) providing the connection of the telescopic piece (10) to at least one edge (9.1, 9.2) of the container (9) from at least one edge surface (10.1, 10.2) has a structure which can be flexibly attached.

11. An induction heating cooker (1) as in any one of the above claims, **characterized in that** the housing (7.2) can be positioned anywhere on the base surface (7.1).
